# EUROPEAN PATENT APPLICATION

(11) **EP 4 517 278 A1**
(43) Date of publication of application: **05.03.2025**
(21) Application number: 23796058.8
(22) Date of filing: 10.04.2023
(51) Int. Cl.: G01F 23/24, A47K 1/02, C02F 1/00

(54) **WATER LEVEL SENSOR, WATER STORAGE TANK, HAND WASHING DEVICE, AND CIRCULATION WATER TREATMENT DEVICE**

(30) Priority: 25.04.2022 JP 2022071255
(71) Applicant: Wota Corp., Tokyo, 103-0002 (JP)
(72) Inventor: YAMADA Ryo, Tokyo 103-0002 (JP); SUMA Hiroki, Tokyo 103-0002 (JP); HORIE Shiro, Tokyo 103-0002 (JP); YAMAZAKI Fuminori, Tokyo 103-0002 (JP); KAWASHIMA Kazunori, Tokyo 103-0002 (JP)
(74) Representative: AWA Sweden AB
(86) International application number: PCT/JP2023/014475
(87) International publication number: WO 2023/210312

(57) **Abstract**

A water level sensor includes a first electrode, a second electrode and a control unit. The first electrode is installed at a first height in a tank that stores water containing impurities including microorganisms that can form a biofilm. The second electrode is installed at a second height higher than the first height in the tank. The control unit detects that water reaches the second height through contact of the first electrode and the second electrode with water.

## Description

### TECHNICAL FIELD

The present disclosure relates to a water level sensor, a water storage tank, a hand washing apparatus and a circulating water treatment apparatus.

### BACKGROUND ART

A standalone circulating hand washing apparatus has been proposed (see Patent Literature 1). In the hand washing apparatus described in Patent Literature 1, for example, water having been used for hand washing is passed through a primary purification filter, and the water having passed through the filter is retained in a water storage tank.

### CITATION LIST

### PATENT LITERATURE

Patent Literature 1: Japanese Patent No. 6877065

### SUMMARY OF INVENTION

### TECHNICAL PROBLEM

With a water storage tank, the water level in the tank needs to be managed in order to prevent overflow of water, for example. With a circulating water treatment apparatus, even water having passed through a primary purification filter contains impurities including microorganisms, such as bacteria. Therefore, some thought is required to accurately measure the water level in a tank that stores such circulating processed water. In addition, attention has to be paid to biofilms formed in a tank that stores water containing impurities.

An object of the present disclosure is to accurately measure the water level in a water storage tank without being affected by biofilm formation even if the tank stores water containing impurities.

### SOLUTION TO PROBLEM

A water level sensor includes a first electrode, a second electrode and a control unit. The first electrode is installed at a first height in a tank that stores water containing impurities including microorganisms and organic matters that can form a biofilm. The second electrode is installed at a second height higher than the first height in the tank. The control unit detects that water reaches the second height through contact of the first electrode and the second electrode with water.

### ADVANTAGEOUS EFFECT(S) OF INVENTION

According to the present disclosure, the water level in a water storage tank can be accurately measured even if the tank stores water containing impurities including microorganisms that can form a biofilm.

### BRIEF DESCRIPTION OF THE DRAWINGS

[FIG. 1] FIG. 1 is an external perspective view of a hand washing apparatus 1 according to an embodiment.
[FIG. 2] FIG. 2 is an external perspective view of the hand washing apparatus 1 according to the embodiment.
[FIG. 3] FIG. 3 is a block diagram showing a pharmaceutical agent unit 5, a circulation unit 6 and a control unit 60 of the hand washing apparatus 1.
[FIG. 4] FIG. 4 is a front view of a water storage tank 44 shown in FIG. 3.
[FIG. 5] FIG. 5 is a front view of the water storage tank 44 shown in FIG. 4 with a lid portion 441 removed from a tank portion 442.
[FIG. 6] FIG. 6 is a front view of the water storage tank 44 shown in FIG. 4 with a first electrode 4411, a water level sensor 4412, a supply tubes 4413 and 4414, a discharge tube 4415, a second electrode 4416 and a third electrode 4417 housed in the tank portion 442.
[FIG. 7] FIG. 7 is a flowchart showing spout processing of the hand washing apparatus 1.
[FIG. 8] FIG. 8 is a flowchart showing drainage processing of the hand washing apparatus 1.
[FIG. 9] FIG. 9 is a flowchart showing membrane filtration processing of the hand washing apparatus 1.
[FIG. 10] FIG. 10 is a flowchart showing water level measurement processing of the water storage tank 44.
[FIG. 11] FIG. 11 is a flowchart showing water level measurement processing of the water storage tank 44.

### DESCRIPTION OF EMBODIMENT

Hereunder, one embodiment of the present invention will be described in detail based on the accompanying drawings. Note that, in the drawings for describing the embodiment, in principle, the same reference symbols are assigned to the same constituent elements, and repeated description thereof is omitted.

### <Overview>

A hand washing apparatus 1 according to this embodiment has electrodes at a first position at a predetermined first height and a second position at a second height higher than the first height in a water storage tank that retains water containing impurities including microorganisms and organic matters that can form a biofilm. When water comes into contact with an electrode close to the bottom and another electrode, an electric current flows, and it is detected that water is stored to the level at which the other electrode is installed. Water containing impurities including microorganisms and organic matters that can form a biofilm may be referred to as soil water.

### <Apparatus configuration>

A water storage tank 44 according to this embodiment will be described by taking the hand washing apparatus 1 using the water storage tank 44 as an example.

The hand washing apparatus 1 is a standalone circulating hand washing apparatus, for example.

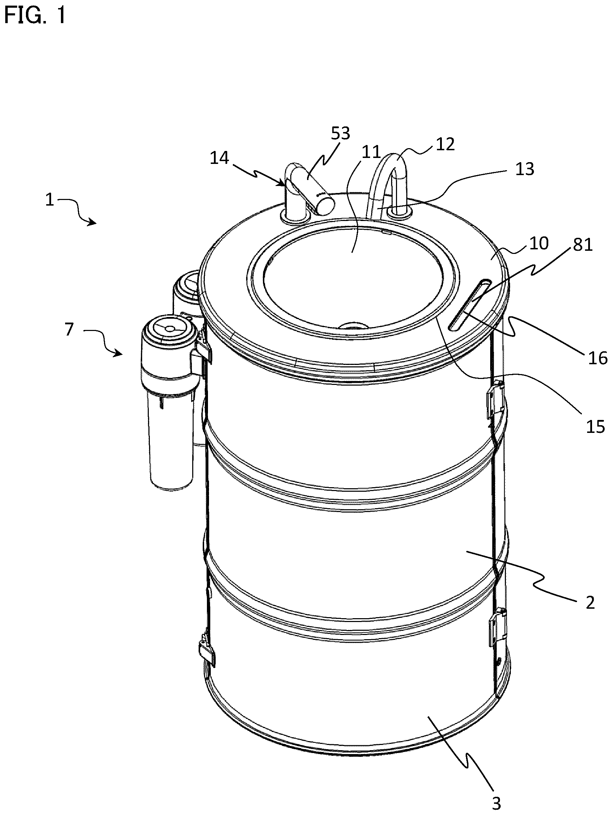

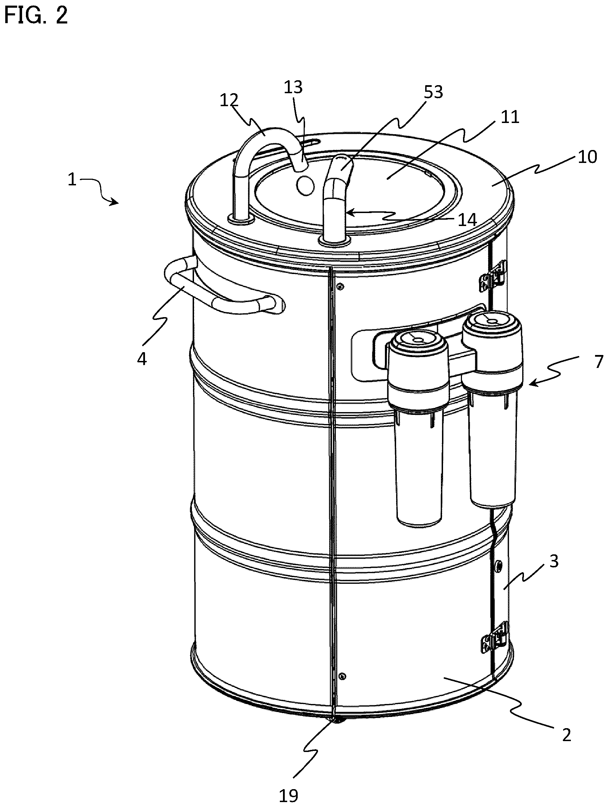

FIG. 1 and FIG. 2 are external perspective views of the hand washing apparatus 1 of the present embodiment. Note that, in the following description, a side on which a user who uses the hand washing apparatus 1 stands is referred to as the front of the hand washing apparatus 1, and an opposite side thereto is referred to as the rear of the hand washing apparatus.

As illustrated in FIG. 1, the hand washing apparatus 1 includes a casing 2, and an externally attached module 7.

A wash-hand basin (sink) 11, a faucet 12, and a dispenser 14 are provided in the casing 2.

The casing 2 is formed in a cylindrical shape. The casing 2 is made by, for example, processing a drum can. A top plate 10 is provided at an upper part of the casing 2. An installation hole that penetrates the top plate 10 is formed in a central part of the top plate 10.

A door 3 for accessing a circulation unit 6 provided inside the casing 2 is provided in an outer peripheral surface of the casing 2. A manager of the hand washing apparatus 1 can perform maintenance of the circulation unit 6 in a state in which the door 3 is open.

An entire structure of the circulation unit 6 is not provided inside the casing 2, and at least one part of the circulation unit 6 is arranged outside the casing 2 as a part of the externally attached module 7.

As illustrated in FIG. 2, a handle 4 extending in a lateral direction is provided on the rear of the casing 2. A plurality of wheels 19 are provided on a bottom surface of the casing 2. The user can move the casing 2 by moving the wheels 19 in a state in which the user grips the handle 4.

A spout 13 for spouting washing water is formed at a tip of the faucet 12. Washing water is spouted from the spout 13 at a predetermined timing.

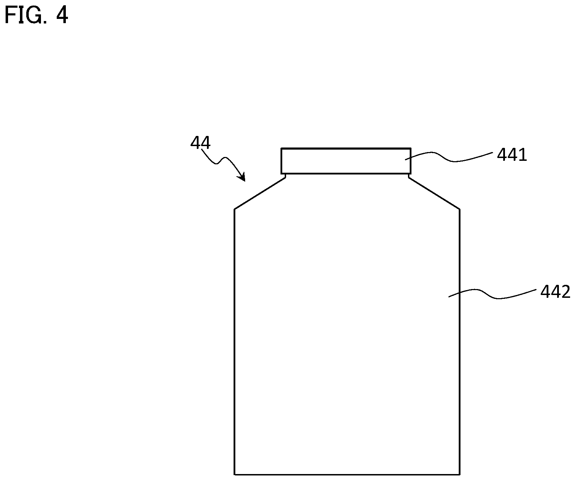

An infrared sensor 23 (see FIG. 4) is provided in the faucet 12. In case an object is detected by the infrared sensor 23, washing water is spouted from the spout 13 of the faucet 12.

Note that, a position at which the infrared sensor 23 is provided in the faucet 12 is not limited to the tip, and can be changed arbitrarily.

The dispenser 14 dispenses a pharmaceutical agent for maintaining skin hygiene from a nozzle 53 toward the inside of the wash-hand basin 11. Examples of pharmaceutical agents for maintaining skin hygiene include cleansing agents for cleaning the skin (for example, a cleanser such as soapy water), and liquids or hand lotions or the like having a bactericidal action (for example, a disinfectant containing an ingredient such as alcohol).

An infrared sensor 52 (see FIG. 4) is provided in the dispenser 14. The infrared sensor 52 is provided, for example, in the vicinity of a base of the nozzle 53 of the dispenser 14 so as to be capable of detecting a finger that approaches the inside of the wash-hand basin 11. Upon detection of an object by the infrared sensor 52, the pharmaceutical agent is dispensed from the tip of the nozzle 53 of the dispenser 14.

### <Configuration of pharmaceutical agent unit 5 and circulation unit 6>

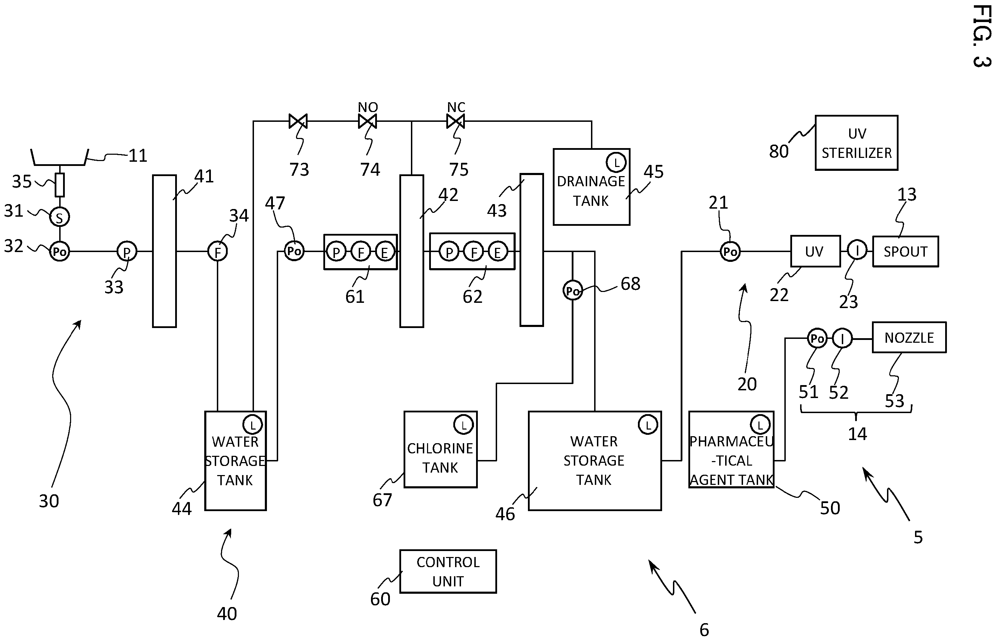

FIG. 3 is a block diagram illustrating a pharmaceutical agent unit 5, the circulation unit 6, and a control unit 60 of the hand washing apparatus 1. As shown in FIG. 3, the pharmaceutical agent unit 5 that supplies a pharmaceutical agent, the circulation unit 6 that purifies and circulates washing water, and the control unit 60 that controls the circulation unit 6 are provided inside the casing 2.

The control unit 60 is realized by a processor reading out a program stored in a storage and expanding the program on a memory, and executing commands included in the expanded program. The processor is hardware for executing a set of commands described in a program, and is composed of an arithmetic unit, a register, a peripheral circuit, and the like. The storage is a storage device for storing data, such as a flash memory including a nonvolatile memory or an HDD (hard disc drive). The memory is for temporarily storing programs and also data to be processed by the programs and the like, and for example is a volatile memory such as a DRAM (dynamic random access memory).

As illustrated in FIG. 4, the circulation unit 6 includes at least a spout unit 20, a drainage unit 30, and a purification unit 40.

In the circulation unit 6, the spout unit 20 has a function of causing water purified by the purification unit 40 to spout from the spout 13 of the faucet 12.

The spout unit 20 mainly includes a spout pump 21, a UV sterilization unit 22, and the infrared sensor 23.

The spout pump 21 is arranged at a subsequent stage to a water storage tank 46 that is provided in the purification unit 40. The spout pump 21 is operated under the control of the control unit 60 to send water stored in the water storage tank 46 to the UV sterilization unit 22.

The UV sterilization unit 22 is arranged between the spout pump 21 and the faucet 12. The UV sterilization unit 22 irradiates ultraviolet rays at water sent from the spout pump 21 to subject the water to a sterilization treatment. Water that has passed through the UV sterilization unit 22 is spouted from the spout 13 of the faucet 12 as washing water.

In the circulation unit 6, the drainage unit 30 has a function of draining washing water spouted from the faucet 12 toward the wash-hand basin 11.

The drainage unit 30 mainly includes a trap 35, a capacitance sensor 31, and a drainage pump 32.

The trap 35 is provided in a pipe that drains washing water from the wash-hand basin 11. The trap 35 prevents, for example, a backward flow of a bad odor or gas or the like, and also prevents a foreign matter which entered from the drainage outlet 17 from reaching the purification unit 40.

The drainage pump 32 is arranged at a subsequent stage to the trap 35. The drainage pump 32 is operated under control of the control unit 60, and sends water that passed through the trap 35 to a pretreatment filter 41 provided in the purification unit 40. The pretreatment filter 41 is an example of a primary purification filter in this embodiment.

Specifically, the control unit 60 actuates the drainage pump 32 in response to the detection of water by the capacitance sensor 31. For example, the control unit 60 causes the drainage pump 32 to operate during a period in which water is detected by the capacitance sensor 31. In case no more water is detected by the capacitance sensor 31, the control unit 60 stops the drainage pump 32.

The capacitance sensor 31 is arranged between the trap 35 and the drainage pump 32. The capacitance sensor 31 detects the capacitance inside the drainage pipe. By this means, water drained from the wash-hand basin 11 and supplied through the trap 35 is detected. Note that, a sensor for detecting the supply of water is not limited to the capacitance sensor 31. The supply of water may be detected by referring to a different sensing result. For example, the capacitance sensor 31 may be a pressure sensor that detects a pressure.

In the circulation unit 6, the purification unit 40 has a function of purifying the water supplied from the drainage unit 30. The purification unit 40 mainly includes the pretreatment filter 41, a reverse osmosis membrane 42, a post-treatment filter 43, an water storage tank 44, a drainage tank 45, the water storage tank 46, and a membrane filtration pump 47.

The pretreatment filter 41 is arranged at a subsequent stage to the drainage pump 32. The pretreatment filter 41 subjects the water sent from the drainage pump 32 to a pretreatment that removes a solid content, water polluting components, low-molecular-weight compound surfactants, carbonic acid components (detergent components), and the like.

Although in the present embodiment an activated carbon filter is adopted as the pretreatment filter 41, the present invention is not limited thereto. For example, a string wound filter, a sediment filter, an MF (microfiltration membrane), a UF (ultrafiltration membrane), an NF (nano-filtration membrane), a ceramic filter, an ion exchange filter, and a metal membrane may be selected. In the present embodiment, the pretreatment filter 41 is arranged outside the casing 2 as a part of the externally attached module 7.

A pressure sensor 33 is arranged at a preceding stage to the pretreatment filter 41. The pressure sensor 33 detects a pressure of water supplied to the pretreatment filter 41.

A flow rate sensor 34 is arranged at a subsequent stage to the pretreatment filter 41. The flow rate sensor 34 detects a flow rate of water pretreated by the pretreatment filter 41.

The water storage tank 44 is arranged at a subsequent stage to the pretreatment filter 41. The water storage tank 44 is a tank for storing supplied water. Water subjected to the pretreatment by the pretreatment filter 41 and concentrated water separated by the reverse osmosis membrane 42 and passed through a two-way solenoid valve 74 flow into the water storage tank 44. The water storage tank 44 stores the water that flows in from these two systems.

A water level sensor is arranged in the water storage tank 44. The water level sensor detects a level of the water stored inside the water storage tank 44.

The membrane filtration pump 47 is arranged between the water storage tank 44 and the reverse osmosis membrane 42.

The membrane filtration pump 47 is operated under the control of the control unit 60, and pressurizes the water stored in the water storage tank 44 to a preset pressure and supplies the water to the reverse osmosis membrane 42. Note that, the preset pressure is, for example, a pressure that is at least higher than the osmotic pressure.

The reverse osmosis membrane 42 separates the water pressurized to a high pressure and supplied by the membrane filtration pump 47 into permeated water from which dissolved components have been removed, and concentrated water in which dissolved components have been concentrated. The reverse osmosis membrane 42 is realized, for example, by a spiral reverse osmosis membrane. The reverse osmosis membrane 42 is an example of a cross-flow membrane filter. The term "cross-flow membrane filter" refers to a membrane filter which performs filtration while suppressing the occurrence of a situation in which suspended solids and colloids in discharged water supplied to the membrane build-up on the membrane surface, by creating a flow parallel to the membrane surface. In other words, the term "cross-flow membrane filter" refers to a membrane that performs filtration by pressure-feeding discharged water at a higher pressure than an osmotic pressure of the membrane. As such a cross-flow membrane filter, instead of the reverse osmosis membrane, a nano-filtration membrane (NF membrane), an ultrafiltration membrane (UF membrane), a microfiltration membrane (MF membrane) or the like may be used.

In case the two-way solenoid valve 74 is open, the concentrated water separated by the reverse osmosis membrane 42 is discharged to the water storage tank 44 through the two-way solenoid valve 74 and a pressure regulating valve 73**.** Further, in case a two-way solenoid valve 75 is open, the concentrated water separated by the reverse osmosis membrane 42 is discharged to the drainage tank 45 through the two-way solenoid valve 75. In addition, the permeated water separated by the reverse osmosis membrane 42 is discharged to the post-treatment filter 43.

The two-way solenoid valve 74 is a device that opens and closes a valve using the electromagnetic force of an electromagnetic coil. The two-way solenoid valve 74 has a structure in which the valve is open in a normal state, and which closes the valve in response to a signal from the control unit 60.

The pressure regulating valve 73 regulates a flow rate or pressure of the concentrated water that is supplied to the water storage tank 44.

The two-way solenoid valve 75 is a device that opens and closes a valve using the electromagnetic force of an electromagnetic coil. The two-way solenoid valve 75 has a structure in which the valve is closed in a normal state, and which opens the valve in response to a signal from the control unit 60.

A sensor unit 61 is arranged at a preceding stage to the reverse osmosis membrane 42. In the illustrated example, the sensor unit 61 has a pressure sensor, a flow rate sensor, and an EC/temperature sensor.

The pressure sensor detects a pressure of the water supplied to the reverse osmosis membrane 42.

The flow rate sensor detects a flow rate of the water supplied to the reverse osmosis membrane 42.

The EC/temperature sensor detects the electric conductivity and temperature of the water supplied to the reverse osmosis membrane 42.

Note that, besides the aforementioned sensors, the sensor unit 61 may also have a sensor that senses at least one of the items listed below.
(1) pH, oxidation-reduction potential, alkalinity, ion concentration, hardness
(2) Turbidity, chromaticity, viscosity, dissolved oxygen
(3) Odor, ammonia nitrogen, nitrate nitrogen, nitrite nitrogen, total nitrogen, residual chlorine, total phosphorus, total organic carbon, total inorganic carbon, total trihalomethane
(4) A detection result of a microbial sensor, chemical oxygen demand, biological oxygen demand
(5) Cyanogen, mercury, an oil content, surfactants
(6) A detection result of an optical sensor, a detection result of a TDS (total dissolved solids) sensor
(7) A mass spectrometry result, fine particles, zeta potential, surface potential

The post-treatment filter 43 is arranged at a subsequent stage to the reverse osmosis membrane 42. The post-treatment filter 43 subjects the permeated water discharged from the reverse osmosis membrane 42 to a post-treatment that removes impurities which could not be completely filtered by the reverse osmosis membrane 42.

Although in the present embodiment an activated carbon filter is adopted as the post-treatment filter 43, the present invention is not limited thereto. For example, a string wound filter, a sediment filter, an MF (microfiltration membrane), a UF (ultrafiltration membrane), an NF (nano-filtration membrane), a ceramic filter, an ion exchange filter, and a metal membrane may be selected. In the present embodiment, the post-treatment filter 43 is arranged outside the casing 2 as a part of the externally attached module 7.

A sensor unit 62 is arranged at a preceding stage to the post-treatment filter 43. In the illustrated example, the sensor unit 62 has a pressure sensor, a flow rate sensor, and an EC/temperature sensor.

The pressure sensor detects a pressure of the permeated water supplied to the post-treatment filter 43.

The flow rate sensor detects a flow rate of the permeated water supplied to the post-treatment filter 43.

The EC/temperature sensor detects the electric conductivity and temperature of the permeated water supplied to the post-treatment filter 43.

Note that, besides the aforementioned sensors, the sensor unit 62 may also have a sensor that senses at least one of the items (1) to (7) listed above in the description of the sensor unit 61.

The drainage tank 45 is arranged at a subsequent stage to the two-way solenoid valve 75. The drainage tank 45 is a tank for storing discharged water that is supplied thereto. The drainage tank 45 can be detached from the purification unit 40, and taken out through the door 3. Concentrated water separated by the reverse osmosis membrane 42 and passed through the two-way solenoid valve 75 flows into the drainage tank 45. The drainage tank 45 stores the concentrated water that flows in.

A water level sensor is arranged in the drainage tank 45. The water level sensor detects a level of the discharged water stored in the drainage tank 45.

The water storage tank 46 is arranged at a subsequent stage to the post-treatment filter 43. The water storage tank 46 is a tank for storing water supplied thereto. Water subjected to post-treatment by the post-treatment filter 43 flows into the water storage tank 46. Hypochlorous acid water is added to the water that flows into the water storage tank 46. The water storage tank 46 stores the water to which the hypochlorous acid water has been added and which flows into the water storage tank 46.

A water level sensor is arranged in the water storage tank 46. The water level sensor detects a level of the water stored in the water storage tank 46.

The purification unit 40 includes a chlorine tank 67 and a chlorine pump 68.

The chlorine tank 67 is a tank for storing hypochlorous acid water. The hypochlorous acid water is generated, for example, by dissolving a hypochlorous acid tablet in water supplied to the chlorine tank 67. Alternatively, the hypochlorous acid water may be generated by dissolving salt in the water supplied to the chlorine tank 67, and electrolyzing the salt solution.

Note that, an electrolysis unit that subjects a salt solution to electrolysis to generate hypochlorous acid water may be separately provided on a downstream side of the chlorine tank 67.

A water level sensor is arranged in the chlorine tank 67. The water level sensor detects a level of the hypochlorous acid water stored in the chlorine tank 67.

The chlorine pump 68 is arranged at a subsequent stage to the chlorine tank 67. The chlorine pump 68 is operated under the control of the control unit 60 to add hypochlorous acid water stored in the chlorine tank 67 to the water subjected to the post-treatment by the post-treatment filter 43.

As the pharmaceutical agent unit 5, a pharmaceutical agent tank 50 and the dispenser 14 are provided inside the casing 2. The dispenser 14 is provided with a pharmaceutical agent pump 51, the infrared sensor 52 and the nozzle 53. An antenna for transmitting and receiving data is mounted inside the nozzle 53.

The pharmaceutical agent pump 51 is arranged at a subsequent stage to the pharmaceutical agent tank 50. The pharmaceutical agent pump 51 is operated under the control of the control unit 60, and sends a pharmaceutical agent (for example, soapy water) that is stored in the pharmaceutical agent tank 50 to the nozzle 53 of the dispenser 14.

Specifically, the control unit 60 actuates the pharmaceutical agent pump 51 in response to the detection of an object by the infrared sensor 52 of the dispenser 14. For example, the control unit 60 causes the pharmaceutical agent pump 51 to operate during a certain period of time in which an object is detected by the infrared sensor 52.

The pharmaceutical agent tank 50 is a tank for storing a pharmaceutical agent. A liquid level sensor is arranged in the pharmaceutical agent tank 50. The liquid level sensor detects a level of the pharmaceutical agent stored inside the pharmaceutical agent tank 50. In case the level of the pharmaceutical agent drops below a predetermined value, the pharmaceutical agent is replenished.

### <Configuration of water storage tank>

FIG. 4 is a front view of the water storage tank 44 shown in FIG. 3. As shown in FIG. 4, the water storage tank 44 has a lid portion 441 and a tank portion 442.

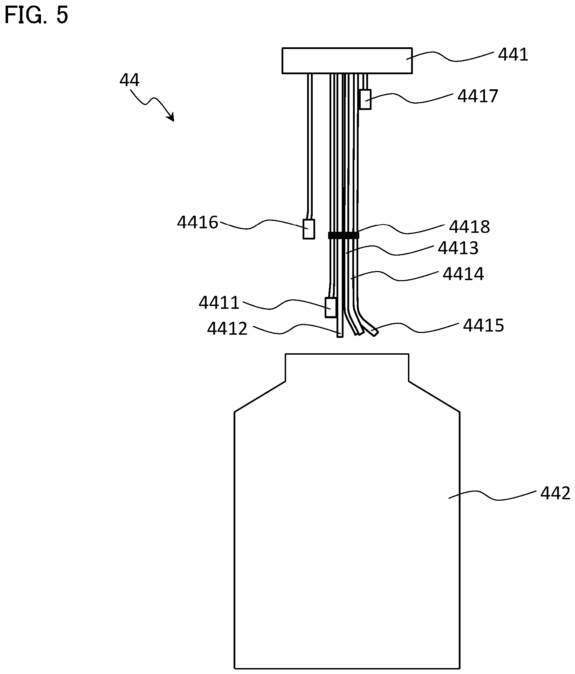

FIG. 5 is a front view of the water storage tank 44 shown in FIG. 4 with the lid portion 441 removed from the tank portion 442. As shown in FIG. 5, a first electrode 4411, a water level sensor 4412, supply tubes 4413 and 4414, a discharge tube 4415, a second electrode 4416 and a third electrode 4417 are attached to the lid portion 441. The first electrode 4411, the water level sensor 4412, the supply tubes 4413 and 4414, the discharge tube 4415, the second electrode 4416 and the third electrode 4417 are attached by being suspended from a surface of the lid portion 441 facing the tank portion 442 toward the inside of the tank portion 442. In other words, the first electrode 4411, the water level sensor 4412, the supply tubes 4413 and 4414, the discharge tube 4415, the second electrode 4416 and the third electrode 4417 located inside the tank portion 442 are supported at positions where they are not in contact with water containing impurities. In this embodiment, the impurities include microorganisms and organic matters that are nutrient sources for microorganisms that can form a biofilm, for example. In this embodiment, the microorganisms include bacteria, viruses, protists, and algae, for example.

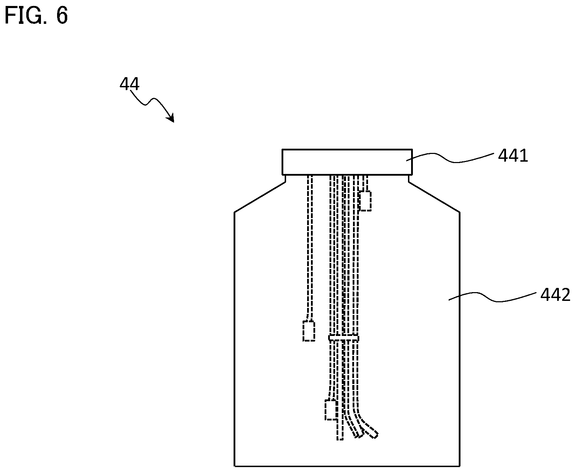

FIG. 6 is a front view of the water storage tank 44 shown in FIG. 4 with the first electrode 4411, the water level sensor 4412, the supply tubes 4413 and 4414, the discharge tube 4415, the second electrode 4416 and the third electrode 4417 housed in the tank portion 442.

The first electrode 4411 is arranged to be located at a predetermined first height in the tank portion 442. The predetermined first height is generally such a height that the first electrode 4411 at the predetermined first height comes into contact with water when a predetermined amount (1 liter or so, for example) of water is stored in the tank portion 442, for example. The first electrode 4411 is suspended from the lid portion 441 and positioned at the first height by a lead wire coated with a tube or the like extending from the lid portion 441.

When the first electrode 4411 and the second electrode 4416 come into contact with water, an electric current flows through the water between the first electrode 4411 and the second electrode 4416. In other words, the water level sensor according to this embodiment has the first electrode 4411, the second electrode 4416 and the control unit 60. When the first electrode 4411 and the third electrode 4417 come into contact with water, an electric current flows through the water between the first electrode 4411 and the third electrode 4417. In other words, the water level sensor according to this embodiment has the first electrode 4411, the third electrode 4417 and the control unit 60. The first electrode 4411 is implemented as an electrical conductivity sensor, for example, and an electric current flows when the first electrode 4411 comes into contact with water.

The water level sensor 4412 is a sensor that measures the water level of the water in the water storage tank 44. The water level sensor 4412 is an example of a water level measuring instrument according to this embodiment. The water level sensor 4412 is a sensor that measures a change in liquid pressure in accordance with the liquid level and converts the change into a water level, for example. The water level sensor 4412 can linearly measure the water level, for example. In case the water level sensor 4412 is a sensor of a type that measures pressure, the water level sensor 4412 is provided in a substantially vertical orientation from the lid portion 441 to the vicinity of the bottom of the tank portion 442. The water level sensor 4412 is arranged so that an end part thereof is located in the vicinity of the bottom of the tank portion 442.

The water level sensor 4412 is made of a hard material, such as metal, and is maintained in the substantially vertical orientation from the lid portion 441 to the vicinity of the bottom of the tank portion 442. In case the water level sensor 4412 is made of a material other than metal, such as a polymeric compound such as polyethylene, a support member made of a hard material, such as metal, may be used to maintain the water level sensor 4412 in the substantially vertical orientation from the lid portion 441 to the vicinity of the bottom of the tank portion 442. In the example shown in FIG. 5, the water level sensor 4412 is attached to the lid portion 441 in such a manner that the water level sensor 4412 is located substantially at the center of the water storage tank 44.

The water level sensor 4412 is corrected based on the water level detected by the first electrode 4411, the second electrode 4416 and the third electrode 4417. In other words, a water level sensor according to this embodiment include the water level sensor 4412.

Note that the water stored in the water storage tank 44 contains impurities, so that it is not be recommended to use a floating sensor as the water level sensor 4412.

The supply tubes 4413 and 4414 are tubes for supplying water to the water storage tank 44. The supply tubes 4413 and 4414 are made of a polymeric compound such as polyethylene, for example. The supply tube 4413 supplies water subjected to a pretreatment by the pretreatment filter 41 to the water storage tank 44. The supply tube 4413 supplies concentrated water having been separated by the reverse osmosis membrane 42 and passed through a two-way solenoid valve 74 to the water storage tank 44.

The supply tubes 4413 and 4414 are arranged in such a manner that end parts thereof are located in the vicinity of the bottom of the tank portion 442. The end parts of the supply tubes 4413 and 4414 are arranged to face away from the end part of the water level sensor 4412 so that the measurement of the water level by the water level sensor 4412 is not affected by the water supplied through the supply tubes 4413 and 4414. In a specific example, for example, the end parts of the supply tubes 4413 and 4414 are arranged away from the end part of the water level sensor 4412 to minimize the bubbles entering the tip end of the water level sensor 4412.

The discharge tube 4415 is a tube for discharging water from the water storage tank 44. The discharge tube 4415 is made of a polymeric compound such as polyethylene, for example. The discharge tube 4415 discharges water stored in the water storage tank 44 to the outside of the water storage tank 44 under pressure generated by the membrane filtration pump 47.

The discharge tube 4415 is arranged so that an end part thereof is located in the vicinity of the bottom of the tank portion 442. The end part of the discharge tube 4415 is arranged to face away from the end part of the water level sensor 4412 so that the measurement of the water level by the water level sensor 4412 is not affected by the water sucked in by the discharge tube 4415. For example, the end part of the discharge tube 4415 is arranged away from the end part of the water level sensor 4412 to minimize the bubbles entering the tip end of the water level sensor 4412.

The first electrode 4411, the supply tubes 4413 and 4414 and the discharge tube 4415 are attached to the lid portion 441 and have some lengths to the respective ends in the vicinity of the bottom of the tank portion 442. Therefore, without a binding, the first electrode 4411, the supply tubes 4413 and 4414 and the discharge tube 4415 spread out, and it is difficult to stably adjust the water level in the water storage tank 44. Specifically, for example, if the position of the first electrode 4411 varies, the correct water level cannot be detected. Furthermore, if the positions of the supply tubes 4413 and 4414 vary, the end parts of the supply tubes 4413 and 4414 move when water is supplied, and an unwanted water flow occurs in the water storage tank 44. Furthermore, if the position of the discharge tube 4415 varies, the operation of discharging the water in the water storage tank 44 is affected.

In view of this, the first electrode 4411, the water level sensor 4412, the supply tubes 4413 and 4414 and the discharge tube 4415 are tied together with a clip 4418 to ensure that the first electrode 4411, the supply tubes 4413 and 4414 and the discharge tube 4415 are steadily located in the vicinity of the bottom of the tank portion 442. Since the water level sensor 4412 is arranged in the substantially vertical orientation, the first electrode 4411, the supply tubes 4413 and 4414 and the discharge tube 4415 can be prevented from spreading out, by fixing the first electrode 4411, the supply tubes 4413 and 4414 and the discharge tube 4415 to the water level sensor 4412 (or the support member for the water level sensor 4412). In case the first electrode 4411, the supply tubes 4413 and 4414 and the discharge tube 4415 are fixed to the water level sensor 4412, the water level sensor 4412 may be referred to as a support member for the first electrode 4411, the supply tubes 4413 and 4414 and the discharge tube 4415.

The second electrode 4416 is arranged at a predetermined second height in the tank portion 442. The predetermined second height is generally such a height that the second electrode 4416 at the predetermined second height comes into contact with water when a predetermined amount (2.5 liter or so, for example) of water is stored in the tank portion 442, for example. The second height is higher than the first height. The second electrode 4416 is suspended from the lid portion 441 and positioned at the second height by a lead wire coated with a tube or the like extending from the lid portion 441.

The second electrode 4416 is arranged in such a manner that the second electrode 4416 are not in contact with other components including the first electrode 4411, the water level sensor 4412, the supply tubes 4413 and 4414 and the discharge tube 4415. Specifically, the second electrode 4416 is not tied to the first electrode 4411, the water level sensor 4412, the supply tubes 4413 and 4414 and the discharge tube 4415. In other words, the second electrode 4416 is arranged at a predetermined distance toward the outer circumference of the water storage tank 44 from the bundle of the first electrode 4411, the water level sensor 4412, the supply tubes 4413 and 4414 and the discharge tube 4415. Furthermore, in other words, the second electrode 4416 is arranged at a predetermined distance from the first electrode 4411. The predetermined distance is generally a distance at which no biofilm is formed on the second electrode 4416, for example.

The length from the lid portion 441 to the second electrode 4416 is shorter than the length from the lid portion 441 to the first electrode 4411. Furthermore, since the second electrode 4416 are away from the end parts of the supply tubes 4413 and 4414 and the end parts of the discharge tube 4415, the second electrode 4416 is less likely to be affected by the water flow caused by the supply of water or the discharge of water. Therefore, a change of the second electrode 4416 is smaller than a change of the first electrode 4411 and has a smaller influence on the detection of the water level.

Since the second electrode 4416 is arranged in such a manner that the second electrode 4416 are not in contact with other components including the first electrode 4411, the water level sensor 4412, the supply tubes 4413 and 4414 and the discharge tube 4415, impurities contained in the water can be prevented from adhering to the second electrode 4416. Therefore, the water level detection capability can be prevented from being deteriorated.

The third electrode 4417 is arranged at a predetermined third height in the tank portion 442. The predetermined third height is generally such a height that the third electrode 4417 at the predetermined third height comes into contact with water immediately before the tank portion 442 becomes full of water, for example. Specifically, the third height is the height close to the position where an upper part of the tank portion 442 starts decreasing in diameter toward the opening. The third height is higher than the second height. The third electrode 4417 is suspended from the lid portion 441 and positioned at the third height by a lead wire coated with a tube or the like extending from the lid portion 441.

The third electrode 4417 is arranged in such a manner that the third electrode 4417 are not in contact with other components including the first electrode 4411, the water level sensor 4412, the supply tubes 4413 and 4414 and the discharge tube 4415. Specifically, the third electrode 4417 is not tied to the first electrode 4411, the water level sensor 4412, the supply tubes 4413 and 4414 and the discharge tube 4415. In other words, the third electrode 4417 is arranged at a predetermined distance toward the outer circumference of the water storage tank 44 from the bundle of the first electrode 4411, the water level sensor 4412, the supply tubes 4413 and 4414 and the discharge tube 4415. Furthermore, in other words, the third electrode 4417 is arranged at a predetermined distance from the first electrode 4411. The predetermined distance is generally a distance at which no biofilm is formed on the third electrode 4417, for example.

Note that a control board having a capability of controlling the first electrode 4411, the water level sensor 4412, the second electrode 4416 and the third electrode 4417 may be separated from the control unit 60 and attached to the lid portion 441.

### <Control processing of hand washing apparatus 1>

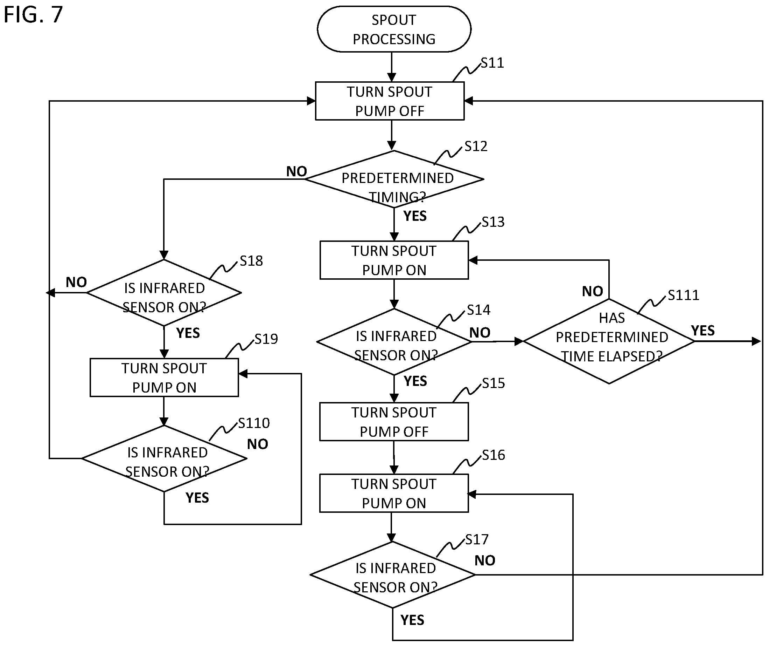

Next, control processing of the hand washing apparatus 1 will be described. Figures 7 to 9 is explanatory diagrams illustrating control processing of the hand washing apparatus 1.

### (Spouting process of spout unit 20)

First, a process for spouting water from the faucet 12 that is carried out by the spout unit 20 will be described.

As illustrated in FIG. 7, the control unit 60 turns the spout pump 21 off (step S11).

The control unit 60 determines whether or not a predetermined timing has been reached (step S12). Specifically, the control unit 60 determines whether a preset time has been reached, whether a preset period has elapsed or whether a preset time has elapsed since the last driving of the spout pump 21, for example. If the predetermined timing is reached (Yes in step S12), the control unit 60 actuates the spout pump 21 (step S13). Thus, water is circulated in the hand washing apparatus 1 at a timing other than a timing when a user washes their hands.

The spout pump 21 sends water stored in the water storage tank 46 to pass through the UV sterilization unit 22. The UV sterilization unit 22 irradiates ultraviolet rays at the water sent from the spout pump 21, to thereby subject the water to a sterilization treatment. The water that passes through the UV sterilization unit 22 is spouted from the spout 13 of the faucet 12 as washing water.

The control unit 60 determines whether or not an object has been detected by the infrared sensor 23 (step S14). To use the hand washing apparatus 1, the user puts their hands into the wash-hand basin 11 so that the infrared sensor 23 arranged at the tip portion of the faucet 12 detects one or more fingers.

In response to the detection of a finger by the infrared sensor 23 (Yes in step S14), the control unit 60 stops the spout pump 21 (step S15). When the user washes their hands, the spout pump 21 is temporarily stopped, thereby allowing differentiation between the forced spouting and the spouting for hand washing. After stopping the spout pump 21, the control unit 60 actuates the spout pump 21 again for hand washing (step S16).

The control unit 60 determines whether or not an object has been detected by the infrared sensor 23 (step S17). When finishing washing their hands, or when causing the dispenser 14 to dispense the pharmaceutical agent, the user moves their hands away from the infrared sensor 23 arranged at the tip portion of the faucet 12.

In response to the non-detection of a finger by the infrared sensor 23 (No in step S17), the control unit 60 stops the spout pump 21 (step S11).

In step S17, if non-detection of a finger by the infrared sensor 23 does not occur (Yes in step S17), the control unit 60 lets the spout pump 21 continue to operate (step S16).

In step s12, if the predetermined timing has not been reached (No in step S12), the control unit 60 determines whether or not an object has been detected by the infrared sensor 23 (step S18). In case a user utilizes the hand washing apparatus 1, the user puts their hand into the wash-hand basin 11 and causes the infrared sensor 23 arranged at the tip portion of the faucet 12 to detect one or more fingers.

In response to the detection of a finger by the infrared sensor 23 (Yes in step S18), the control unit 60 actuates the spout pump 21 (step S19).

On the other hand, in step S18, if no finger is detected by the infrared sensor 23 (No in step S18), the control unit 60 does not actuate the spout pump 21 (step S11).

The control unit 60 determines whether or not an object has been detected by the infrared sensor 23 (step S110). When finishing washing their hands, or when causing the dispenser 14 to dispense the pharmaceutical agent, the user moves their hands away from the infrared sensor 23 arranged at the tip portion of the faucet 12**.**

In step S110, if non-detection of a finger by the infrared sensor 23 does not occur (Yes in step S110), the control unit 60 continues to operate the spout pump 21 (step S19).

In step S14, if no finger is detected by the infrared sensor 23 (No in step S14), the control unit 60 determines whether or not the predetermined time has elapsed since the spout pump 21 started operating (step S111). If the predetermined time has elapsed (Yes in step S111), the control unit 60 stops the spout pump 21 (step S11). If the predetermined time has not elapsed (No in step S111), the control unit 60 continues to operate the spout pump 21 (step S13).

The spout unit 20 repeats these processes and spouts washing water from the faucet 12.

The control unit 60 may be configured to measure a time period for which a finger is detected by the infrared sensor 23, and to stop water being spouted from the faucet 12 if a finger has been detected for a certain period of time.

In the example shown in FIG. 7, a case has been described in which it is determined in step S14 whether or not a finger of the user has been detected by the infrared sensor 23. However, the determination made in step S14 is not limited to the detection by the infrared sensor 23. For example, the control unit 60 may determine whether or not a user is likely to use the hand washing apparatus 1 to wash their hands. For example, the control unit 60 may determine whether a user is likely to use the hand washing apparatus 1 to wash their hands, by determining, with a monitoring device, whether or not the user is approaching the hand washing apparatus 1. Alternatively, the control unit 60 may determine whether or not a user is likely to use the hand washing apparatus 1 to wash their hands, by determining whether or not a small article has been put on a UV sterilizer 80.

### (Drainage process of drainage unit 30)

Next, a drainage process performed by the drainage unit 30 will be described.

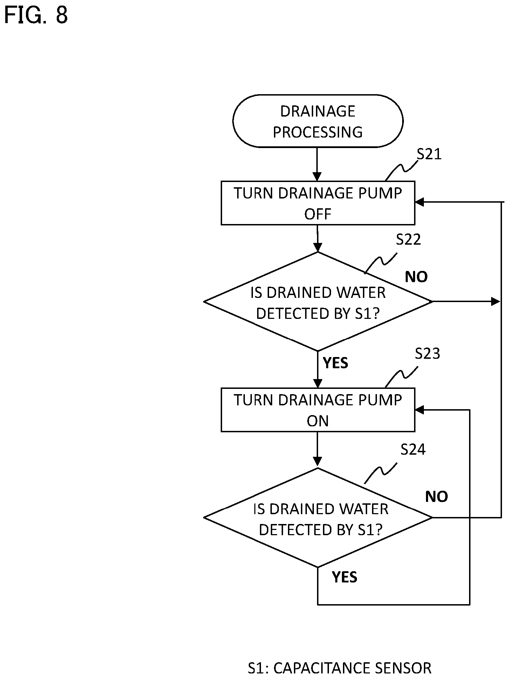

As illustrated in FIG. 8, in a state in which no water is being drained from the wash-hand basin 11, the drainage pump 32 is stopped (step S21).

Subsequently, upon washing water spouted from the faucet 12 toward the wash-hand basin 11 being drained from the drainage outlet 17 of the wash-hand basin 11, the capacitance sensor 31 detects the drained water (step S22).

Upon detection of the drained water by the capacitance sensor 31 (Yes in step S22), the control unit 60 actuates the drainage pump 32 (step S23).

On the other hand, if the capacitance sensor 31 does not detect drained water (No in step S22), the control unit 60 does not actuate the drainage pump 32 (step S21).

In step S23 the drainage pump 32 sends the drained water to the pretreatment filter 41. Water subjected to a pretreatment by the pretreatment filter 41 flows into the water storage tank 44 and is stored in the water storage tank 44. The pressure sensor 33 detects the pressure of the water sent to the pretreatment filter 41. The flow rate sensor 34 detects the flow rate of the water subjected to the pretreatment by the pretreatment filter 41.

Subsequently, after step S23, if the capacitance sensor 31 detects that drained water has stopped flowing in from the drainage outlet 17 (No in step S24), the control unit 60 stops the drainage pump 32 (step S21).

On the other hand, in step S24, if the capacitance sensor 31 detects that drained water continues to flow in from the drainage outlet 17 (Yes in step S24), the control unit 60 continues to operate the drainage pump 32 (step S23).

The drainage unit 30 repeats these processes to supply water that is drained from the drainage outlet 17 of the wash-hand basin 11 to the pretreatment filter 41.

### (Control process of purification unit 40)

Next, a purification process performed by the purification unit 40 will be described.

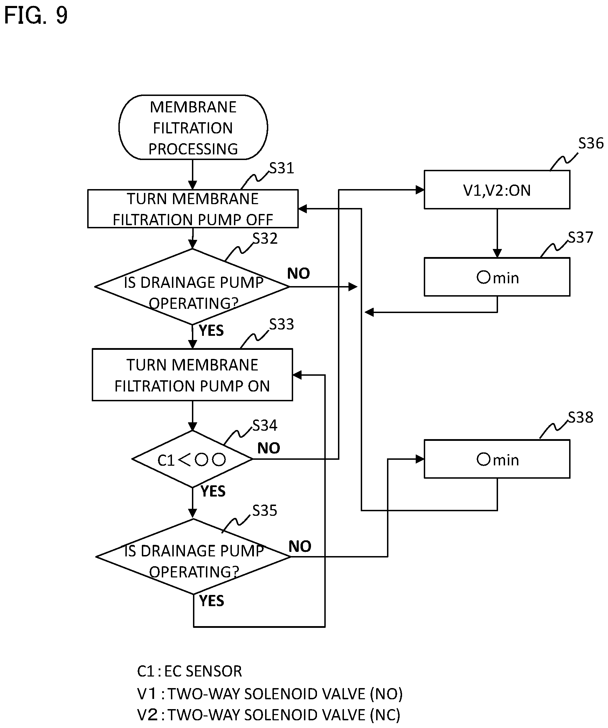

As illustrated in FIG. 9, initially, the membrane filtration pump 47 is stopped (step S31).

The control unit 60 determines whether or not the drainage pump 32 is being operated (step S32).

If the drainage pump 32 is operating (Yes in step S32), the control unit 60 actuates the membrane filtration pump 47 (step S33). By this means, water stored in the water storage tank 44 is supplied at high pressure to the reverse osmosis membrane 42 by the membrane filtration pump 47.

On the other hand, if the drainage pump 32 is not operating (No in step S32), the control unit 60 maintains a state in which the membrane filtration pump 47 is not actuated (step S31).

In step S33, the water supplied to the reverse osmosis membrane 42 is separated into concentrated water and permeated water by the reverse osmosis membrane 42. The permeated water is supplied to the post-treatment filter 43.

The concentrated water flows into the water storage tank 44 via the two-way solenoid valve 74. Note that, because the two-way solenoid valve 75 is in a closed state, a situation does not occur in which the concentrated water flows into the drainage tank 45.

At the post-treatment filter 43, the permeated water is subjected to a post-treatment. Then, hypochlorous acid water is added to the permeated water subjected to the post-treatment by the post-treatment filter 43, and the permeated water to which the hypochlorous acid water has been added flows into the water storage tank 46.

After step S33, the control unit 60 determines whether or not the electric conductivity detected by the EC/temperature sensor of the sensor unit 61 arranged at a preceding stage to the reverse osmosis membrane 42 is less than a predetermined value (step S34).

If the electric conductivity detected by the EC/temperature sensor is less than the predetermined value (Yes in S34), the control unit 60 determines whether or not the drainage pump 32 is operating (step S35). If the drainage pump 32 is operating (Yes in step S35), the control unit 60 continues to operate the membrane filtration pump 47 (step S33).

On the other hand, in step S34, if the electric conductivity detected by the EC/temperature sensor is equal to or greater than the predetermined value (No in step S34), the control unit 60 turns the two-way solenoid valve 74 and the two-way solenoid valve 75 on (step S36). As a result, the two-way solenoid valve 74 is closed, and the two-way solenoid valve 75 is opened.

By the two-way solenoid valve 74 being closed and the two-way solenoid valve 75 being opened, the concentrated water separated by the reverse osmosis membrane 42 flows into the drainage tank 45 via the two-way solenoid valve 75. That is, the control unit 60 determines an amount of impurities in the concentrated water based on a change in electrical conductivity detected by the EC/temperature sensor. Concentrated water that is determined as containing a large amount of impurities is discharged to the drainage tank 45.

In case the water level of the concentrated water stored in the drainage tank 45 reaches a predetermined value, for example, an alert is issued to a manager of the hand washing apparatus 1. Once the manager confirms the alert, the water stored in the drainage tank 45 is discarded.

The control unit 60 continues the process in step S36 for a predetermined period of time (step S37), and after the predetermined period of time has elapsed, the control unit 60 turns the two-way solenoid valves 74 and 75 off. As a result, the two-way solenoid valve 74 is opened and the two-way solenoid valve 75 is closed.

Thus, by the two-way solenoid valve 74 being opened and the two-way solenoid valve 75 being closed, concentrated water separated by the reverse osmosis membrane 42 flows into the water storage tank 44 via the two-way solenoid valve 74. The control unit 60 then stops the membrane filtration pump 47 (step S31).

In step S35, if the drainage pump 32 is stopped (No in step S35), after a predetermined period of time has elapsed (step S38), the control unit 60 stops the membrane filtration pump 47 (step S31).

The purification unit 40 repeats these processes to thereby purify water drained by the drainage unit 30 and store the purified water in the water storage tank 46.

### (Water level measurement processing of water storage tank 44)

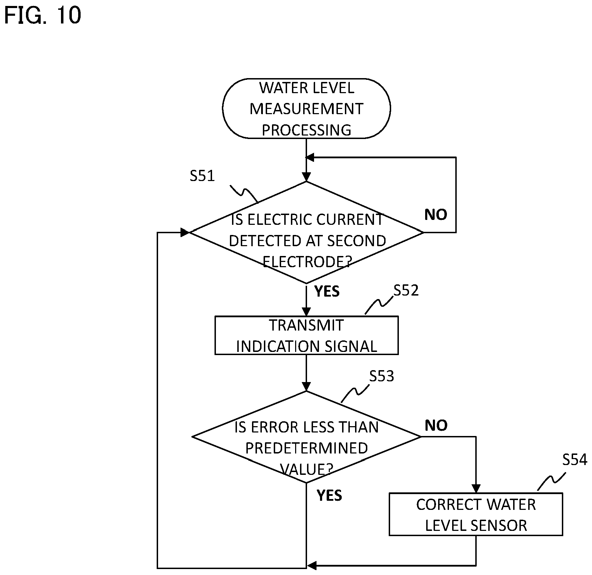

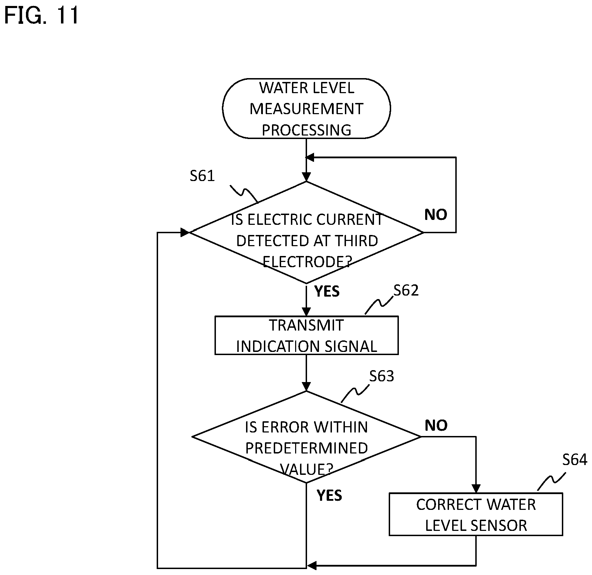

Next, water level measurement processing of the water storage tank 44 will be described. Figures 10 and 11 are diagrams for illustrating water level measurement processing of the water storage tank 44.

As shown in FIG. 10, the control unit 60 determines whether or not an electric current has been detected at the second electrode 4416 (step S51). When water is stored in the water storage tank 44 to the second height, the second electrode 4416 comes into contact with water, and an electric current flows to the second electrode 4416.

In case an electric current is detected at the second electrode 4416 (Yes in step S51), the control unit 60 generates a signal that indicates that water has been stored in the water storage tank 44 to the second height (step S52). In case no electric current is detected at the second electrode 4416 (No in step S51), the control unit 60 repeats the process of step S51 until an electric current is detected at the second electrode 4416.

The control unit 60 determines whether or not the difference between the water level obtained by the water level sensor 4412 and the second height is less than a predetermined value (step S53). Specifically, In case an electric current is detected at the second electrode 4416, the control unit 60 obtains the water level measured by the water level sensor 4412. The control unit 60 compares the obtained water level with the second height to determine whether or not the difference is less than the predetermined value. In case the difference between the obtained water level and the second height is less than the predetermined value (Yes in step S53), the control unit 60 proceeds to step S51. In case the difference between the obtained water level and the second height is equal to or greater than the predetermined value (No in step S53), the control unit 60 corrects the water level sensor 4412 to make the obtained water level coincide with the second height (step S54).

As shown in FIG. 11, the control unit 60 determines whether or not an electric current has been detected at the third electrode 4417 (step S61). When water is stored in the water storage tank 44 to the third height, the third electrode 4417 comes into contact with water, and an electric current flows to the third electrode 4417.

In case an electric current is detected at the third electrode 4417 (Yes in step S61), the control unit 60 generates a signal that indicates that water has been stored in the water storage tank 44 to the third height (step S62). In case no electric current is detected at the third electrode 4417 (No in step S61), the control unit 60 repeats the process of step S61 until an electric current is detected at the third electrode 4417.

The control unit 60 determines whether or not the difference between the water level obtained by the water level sensor 4412 and the third height is less than a predetermined value (step S63). Specifically, In case an electric current is detected at the third electrode 4417, the control unit 60 obtains the water level measured by the water level sensor 4412. The control unit 60 compares the obtained water level with the third height to determine whether or not the difference is less than the predetermined value. In case the difference between the obtained water level and the third height is less than the predetermined value (Yes in step S63), the control unit 60 proceeds to step S61. In case the difference between the obtained water level and the third height is equal to or greater than the predetermined value (No in step S63), the control unit 60 corrects the water level sensor 4412 to make the obtained water level coincide with the third height (step S64).

As described above, in the embodiment described above, the first electrode 4411 is installed at the first height in the tank 44 that stores water containing impurities including microorganisms that can form a biofilm. The second electrode 4416 is installed at the second height higher than the first height in the tank 44. The control unit 60 detects that water reaches the second height in case the first electrode 4411 and the second electrode 4416 come into contact with water. In this way, that water containing impurities reaches a predetermined position in the tank 44 can be accurately detected.

Therefore, with the water level sensor according to this embodiment, the water level of water containing impurities including microorganisms that can form a biofilm can be accurately measured.

Furthermore, in the embodiment described above, the third electrode 4417 is installed at the third height higher than the second height in the tank 44. The control unit 60 detects that water reaches the third height in case the first electrode 4411 and the third electrode 4417 come into contact with water. In this way, even when there are a plurality of water levels for which whether water reaches or not is required to be determined, whether or not water reaches those water levels can be accurately detected.

Furthermore, in the embodiment described above, the first electrode 4411 is fixed and maintained at a predetermined position at the first height in the tank 44. The second electrode 4416 is arranged in such a manner that the second electrode 4416 is not in contact with members including the first electrode 4411. As a result, water flows without stagnation around the second electrode 4416, so that the second electrode 4416 can be prevented from getting soiled. Therefore, the decrease in detection accuracy of the water level can be reduced.

Furthermore, in the embodiment described above, the first electrode 4411 is attached by being suspended from a wall surface higher than the water surface in the tank 44 and fixed to a support member. The second electrode 4416 is attached by being suspended from a wall surface higher than the water surface in the tank 44 and is not fixed to the support member. As a result, the second electrode 4416 is separated from the group of members fixed to the support member and does not get soiled. In other words, no biofilm is formed on the second electrode 4416. Therefore, the decrease in detection accuracy of the water level can be reduced.

Furthermore, in the embodiment described above, the second electrode 4416 is arranged at a predetermined distance from the first electrode 4411. As a result, the second electrode 4416 is separated from the first electrode 4411 arranged together with a plurality of other members and does not get soiled. In other words, no biofilm is formed on the second electrode 4416. Therefore, the decrease in detection accuracy of the water level can be reduced.

Furthermore, in the embodiment described above, the water level measuring instrument 4412 measures the water level in the tank 44. The control unit 60 corrects the water level measuring instrument 4412 based on the water level recognized on contact of the first electrode 4411 and the second electrode 4416 with water. In this way, the water level sensor according to this embodiment can linearly measure the water level in the tank 44 with high accuracy.

Furthermore, in the embodiment described above, the water level measuring instrument 4412 measures the water level in the tank 44. The control unit 60 corrects the water level measuring instrument 4412 based on the water level recognized on contact of the first electrode 4411 and the third electrode 4417 with water. In this way, the water level sensor according to this embodiment can linearly measure the water level in the tank 44 with high accuracy.

### <variations>

In the embodiment described above, an example has been described in which the second electrode 4416 and the third electrode 4417 are installed in the water storage tank 44. However, other electrodes than the first electrode 4411 installed in the water storage tank 44 are not limited to these electrodes. When the water level needs to be more finely detected, three or more electrodes may be installed.

Furthermore, in the embodiment described above, as an example, a case has been described in which the first electrode 4411, the water level sensor 4412, the supply tubes 4413 and 4414, the discharge tube 4415, the second electrode 4416 and the third electrode 4417 are attached by being suspended from a surface of the lid portion 441 facing the tank portion 442 toward the inside of the tank portion 442. However, the first electrode 4411, the water level sensor 4412, the supply tubes 4413 and 4414, the discharge tube 4415, the second electrode 4416 and the third electrode 4417 are not exclusively attached to the lid portion 441. Depending on the shape of the tank, the portion above the water surface may not be the lid portion. The first electrode 4411, the water level sensor 4412, the supply tubes 4413 and 4414, the discharge tube 4415, the second electrode 4416 and the third electrode 4417 need not be attached to the lid portion and can be attached to any wall surface above the water surface in the tank.

Furthermore, in the embodiment described above, a case has been described in which a lead wire covered with a tube is used for the electrodes. However, the lead wire need not be covered with a tube. The lead wire to be connected to an electrode may be covered with a hard material, such as metal. In that case, the first electrode 4411 need not be tied to the support member. The second electrode 4416 is arranged in such a manner that the second electrode 4416 is not contact with other components including the first electrode 4411, the water level sensor 4412, the supply tubes 4413 and 4414 and the discharge tube 4415.

Furthermore, in the embodiment described above, the supply tubes and the discharge tube in the water storage tank 44 have been described. However, the supply tube and the discharge tube in the water storage tank 44 are not limited to those described above. For example, the number of the supply tubes is not limited to 2, and the number of the discharge tubes is not limited to 1.

Furthermore, in the embodiment described above, a case has been described in which the hand washing apparatus 1 is provided with the water storage tank 44. However, the apparatus that is provided with the water storage tank 44 is not limited to the hand washing apparatus 1. A circulating water treatment apparatus that purifies and recycles water, such as drainage from an indoor or outdoor shower booth, a kitchen or a washing machine, rainwater, groundwater or surface water, may be provided with a water storage tank.

Furthermore, in the embodiment described above, as an example, the water storage tank 44 that stores water having passed through the primary purification filter has been described. However, the tank according to this embodiment is not limited to the tank that stores water having passed through the primary purification filter. The tank according to this embodiment can be any tank that stores water containing impurities including microorganisms that can form a biofilm, and the primary purification filter need not be necessarily provided in the preceding stage. For example, the tank according to this embodiment may be used in a circulating water treatment apparatus that circulates and recycles water. Alternatively, the tank according to this embodiment may be used in a predetermined module forming a circulating water treatment apparatus.

Although a preferred embodiment of the present disclosure has been described above, the present disclosure is not limited to such a specific embodiment, and the present disclosure encompasses the invention described in the claims as well as equivalents thereof. The components of the apparatus described in the above embodiment and variations thereof can be partially omitted or combined, as far as no technical contradiction occurs.

The matters described in the above embodiment are supplementarily described below.

### (Supplement 1)

A water level sensor, including: a first electrode installed at a first height in a tank that stores water containing an impurity including a microorganism that is capable of forming a biofilm; a second electrode installed at a second height higher than the first height in the tank; and a control unit that detects that water reaches the second height through contact of the first electrode and the second electrode with water.

### (Supplement 2)

The water level sensor according to (Supplement 1), further including: a third electrode installed at a third height higher than the second height in the tank, wherein the control unit detects that water reaches the third height through contact the first electrode and the third electrode with water.

### (Supplement 3)

The water level sensor according to (Supplement 1) or (Supplement 2), wherein the first electrode is fixed to be maintained at a predetermined position at the first height in the tank, and the second electrode is arranged in such a manner that the second electrode is not in contact with a member including the first electrode.

### (Supplement 4)

The water level sensor according to (Supplement 3), wherein the first electrode is attached by being suspended from a wall surface higher than a water surface in the tank and fixed to a support member, and the second electrode is attached by being suspended from a wall surface higher than the water surface in the tank and is not fixed to the support member.

### (Supplement 5)

The water level sensor according to (Supplement 4), wherein the second electrode is arranged at a predetermined distance from the first electrode.

### (Supplement 6)

The water level sensor according to any one of (Supplement 1) to (Supplement 5), further including: a water level measuring instrument that measures a water level in the tank, wherein the control unit corrects the water level measuring instrument based on the water level recognized in case the first electrode and the second electrode come into contact with water.

### (Supplement 7)

The water level sensor according to any one of (Supplement 1) to (Supplement 5), further including: a water level measuring instrument that measures a water level in the tank, wherein the control unit corrects the water level measuring instrument based on the water level recognized in case the first electrode and the third electrode come into contact with water.

### (Supplement 8)

A water storage tank that stores water containing an impurity including a microorganism that is capable of forming a biofilm, including: the water level sensor according to any one of (Supplement 1) to (Supplement 7).

### (Supplement 9)

A hand washing apparatus, including: a sink into which washing water is spouted; a primary purification filter that purifies drainage from the sink; and a tank configured to store water containing an impurity that passed through the primary purification filter, wherein the tank is provided with the water level sensor according to any one of (Supplement 1) to (Supplement 7).

### (Supplement 10)

A circulating water treatment apparatus, including: a tank configured to store water containing an impurity including a microorganism that is capable of forming a biofilm, wherein the tank is provided with the water level sensor according to any one of (Supplement 1) to (Supplement 7).

### REFERENCE SIGNS LIST

- 1: hand washing apparatus
- 10: top plate
- 11: wash-hand basin
- 12: faucet
- 13: spout
- 14: dispenser
- 19: wheel
- 2: casing
- 3: door
- 4: handle
- 8: attachment section
- 9: attachment section
- 20: spout unit
- 21: spout pump
- 22: UV sterilization unit
- 23: infrared sensor
- 30: drainage unit
- 31: capacitance sensor
- 32: drainage pump
- 33: pressure sensor
- 34: flow rate sensor
- 35: trap
- 40: purification unit
- 41: pretreatment filter
- 42: reverse osmosis membrane
- 43: post-treatment filter
- 44: water storage tank
- 45: drainage tank
- 46: water storage tank
- 47: membrane filtration pump
- 5: pharmaceutical agent unit
- 50: pharmaceutical agent tank
- 51: pharmaceutical agent pump
- 52: infrared sensor
- 53: nozzle
- 6: circulation unit
- 60: control unit
- 61: sensor unit
- 62: sensor unit
- 67: chlorine tank
- 68: chlorine pump
- 7: externally attached module
- 73: pressure regulating valve
- 74: two-way solenoid valve
- 75: two-way solenoid valve
- 80: UV sterilizer
- 81: insertion port

## Claims

1. A water level sensor, comprising:
a first electrode installed at a first height in a tank that stores water containing an impurity including a microorganism that is capable of forming a biofilm;
a second electrode installed at a second height higher than the first height in the tank; and
a control unit configured to detect that water reaches the second height through contact of the first electrode and the second electrode with water.

2. The water level sensor according to claim 1, further comprising:
a third electrode installed at a third height higher than the second height in the tank,
wherein the control unit detects that water reaches the third height through contact of the first electrode and the third electrode with water.

3. The water level sensor according to claim 1 or 2**,** wherein the first electrode is fixed to be maintained at a predetermined position at the first height in the tank, and
the second electrode is arranged in such a manner that the second electrode is not in contact with a member including the first electrode.

4. The water level sensor according to claim 3,
wherein the first electrode is attached by being suspended from a wall surface higher than a water surface in the tank and fixed to a support member, and
the second electrode is attached by being suspended from a wall surface higher than the water surface in the tank and is not fixed to the support member.

5. The water level sensor according to claim 4,
wherein the second electrode is arranged at a predetermined distance from the first electrode.

6. The water level sensor according to any one of claims 1 to 5, further comprising:
a water level measuring instrument that measures a water level in the tank,
wherein the control unit corrects the water level measuring instrument based on the water level recognized in case the first electrode and the second electrode come into contact with water.

7. The water level sensor according to any one of claims 1 to 5, further comprising:
a water level measuring instrument that measures a water level in the tank,
wherein the control unit corrects the water level measuring instrument based on the water level recognized in case the first electrode and the third electrode come into contact with water.

8. A water storage tank that stores water containing an impurity including a microorganism that is capable of forming a biofilm, comprising:
the water level sensor according to any one of claims 1 to 7.

9. A hand washing apparatus, comprising:
a sink into which washing water is spouted;
a primary purification filter that purifies drainage from the sink; and
a tank configured to store water containing an impurity that passed through the primary purification filter,
wherein the tank is provided with the water level sensor according to any one of claims 1 to 7.

10. A circulating water treatment apparatus, comprising:
a tank configured to store water containing an impurity including a microorganism that is capable of forming a biofilm,
wherein the tank is provided with the water level sensor according to any one of claims 1 to 7.
